Europäisches Patentamt

European Patent Office

Office européen des brevets

(11) Publication number: **0 290 204**
**A1**

## EUROPEAN PATENT APPLICATION

(21) Application number: 88303870.5

(22) Date of filing: 28.04.88

(51) Int. Cl.⁴: **A01N 47/38** , //(A01N47/38, 43:653)

(30) Priority: 08.05.87 GB 1093587

(43) Date of publication of application:
09.11.88 Bulletin 88/45

(84) Designated Contracting States:
**AT BE CH DE ES FR GB GR IT LI LU NL SE**

(71) Applicant: **SCHERING AGROCHEMICALS LIMITED**

**Hauxton Cambridge CB2 5HU(GB)**

(72) Inventor: **Williams, Robin John**
**19 Regatta Court**
**Oyster Row Cambridge(GB)**

(74) Representative: **Waldman, Ralph David et al**
**Schering Agrochemicals Limited Industrial**
**Property Department Chesterford Park**
**Research Station**
**Saffron Walden Essex CB10 1XL(GB)**

(54) Fungicidal mixtures with prochloraz.

(57) There is provided a fungicidal composition comprising prochloraz, or a metal complex thereof, and myclobutanil. The mixture has synergistic properties.

EP 0 290 204 A1

## Fungicidal mixtures with prochloraz

This invention relates to compositions with useful fungicidal properties.

The present invention provides a fungicidal composition comprising

a) prochloraz and
b) myclobutanil

Prochloraz is a known fungicide and is the common name for 1-[N-propyl-N-2-(2,4,6-trichlorophenoxy)-ethylcarbamoyl]imidazole, and that name is used in the specification to also include metal complexes of this compound. Myclobutanil is a known fungicide and is the common name for 2-p-chlorophenyl-2-(1H-1,2,4-triazol-1-ylmethyl)hexanenitrile

We have found that the compositions of the invention have advantageous properties over the individual components and that synergism is often demonstrated, and yield of crop may be increased.

The ratios of the prochloraz to myclobutanil vary over a wide range but are usually in the range 5:1 to 1:200, especially 3:1 to 1:2. These ratios are based on the weights of the free base.

In addition, other pesticides may be employed in conjunction with the active ingredients described above providing they do not adversely affect the interaction between the fungicidal components. For example it is sometimes useful to include additional fungicides, e.g carboxin, which extend the range of activity in order to control a wider spectrum of fungi.

The compositions of the invention are active against a wide range of fungi, e.g. powdery mildew (Erysiphe graminis) on cereal crops such as wheat, barley, oats and rye and other foliar diseases such as glume blotch (Septoria nodorum), leaf blotch (Rhynchosporium secalis), eyespot (Pseudocercosporella herpotrichoides) and rusts (e.g. Puccinia graminis). Certain compositions of the present invention can be used to control seed-borne organisms such as bunt (Tilletia caries) on wheat, loose smut (Ustilago nuda and Ustilago hordei) on barley and oats, leaf spot (Pyrenophora avenae) on oats and leaf stripe (Pyrenophora graminis) on barley. The compositions can also be applied to rice for control of rice blast (Pyricularia oryzae), to horticultural crops such as apple trees for the control of apple scab (Venturia inaequalis), roses and other ornamentals for the control of powdery mildew (Sphaerotheca pannosa), rust and black spot, to cucurbits for the control of Botyrtis cinerea, to turf for the control of dollar spot (Sclerotinia homeocarpa) and to stored produce for the control of storage rot organisms of citrus fruit, potatoes, sugar beet, apples, pears etc., (e.g. Penicillium spp., Aspergillus spp. and Botrytis spp.). Other diseases that may be combated include Helminthosporium spp. and Cercospora spp.

Metal complexes of prochloraz are described in our British Patent 1,567,521 and preferred complexes are those formed with manganese (II) chloride or copper (II) chloride.

The compositions of the invention may be employed in many forms and are often most conveniently prepared in aqueous form immediately prior to use. One method of preparing such a composition is referred to as "tank mixing" in which the ingredients in their commercially available form are mixed together by the user in a quantity of water.

In addition to tank mixing immediately prior to use the compositions containing prochloraz and myclobutanil may be formulated into a more concentrated primary composition which is diluted with water or other diluent before use. Such compositions may comprise a surface active agent in addition to the active ingredients and examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with powder diluents such as kaolin, which mixture is granulated by known methods. Alternatively it comprises the active ingredients adsorbed or absorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second components is dispersed as a powder

2

in this concentrate.

The concentrate of the active ingredients (when used as the sole active components) in a composition for direct application to the crop by conventional ground methods is preferably within the range of 0.001 to 10 per cent by weight of the composition, especially 0.005 to 5 per cent by weight, but more concentrated compositions containing up to 40 per cent may be desirable in the case of aerial sprays.

The compositions of the invention are particularly useful for treating seeds, especially cereal seeds, in order to control, particularly, seed-borne diseases. The seeds can be treated in conventional manner using a variety of formulation types, such as dusts, solutions in an organic solvent or aqueous formulations such as flowable suspension concentrates. If cereal grain is to be stored in a store room or container it is sometimes convenient to treat the store room or containers with a composition according to the invention instead of, or in addition to, treatment of the cereal grain itself. A suitable rate of application for a seed dressing is from 0.005 to 1.0 g prochloraz per kilogram of seed, such as for example from 0.01 to 0.25 g per kilogram of seed.

Alternatively the composition of the invention can be applied directly to plants by, for example, spraying or dusting either at the time which the fungus has begun to appear on the plant or before the appearance of fungus, as a protective measure. In both cases the preferred mode of application is by foliar spray. When the composition of the invention is applied directly to the plant a suitable rate of application is from 0.05 to 5 kilograms per hectare, preferably from 0.25 to 1.5 kilogram per hectare.

The invention thus includes a method for controlling a phytopathogenic fungus which comprises applying to seeds, plants and other vegetative material or their habitat, prochloraz and myclobutanil either together or in sequence.

The invention is illustrated in the following Examples which describe _in vitro_ experiments in which a synergistic effect was observed.

### Example 1

Prochloraz and myclobutanil were incorporated into molten agar in amounts to give the required concentration of active ingredient in the agar. The molten agar was then poured into 8.5 cm. petri dishes and allowed to set. The agar in each dish was inoculated with an agar culture of Pseudocercosporella herpotrichoides (W strain) and the dishes were incubated at 20°C. The colony diameters were then measured at various times and the percentage control of growth in comparison with the growth in an dish of agar, used as a standard, which had been similarly inoculated but contained no active ingredidiente, was calculated.

To indicate the existence of synergism between the active components the results were treated in the manner described by Colby S.R., "Calculating Synergisic and Antagonistic Responses of Herbicide Combinations" in Weeds 1967 15, 20-22). In this method the "expected" percent control of growth, E, of the combination compared with untreated control is given by the equation.

$$E = P + F - \frac{PF}{100}$$

where P is the % control by prochloraz, used alone at a given concentration and F is the % control by myclobutanil, used alone at a given concentration. If the observed control of the mixture is greater than E the results indicate synergism. In Table I evidence of synergism is shown at the given rates.

Table I

Concentration of prochloraz (ppm) | Concentration of myclobutanil (ppm) | Observed percentage control | Expected percentage control (E)

14 days after inoculation

| Concentration of prochloraz (ppm) | Concentration of myclobutanil (ppm) | Observed percentage control | Expected percentage control (E) |
|---|---|---|---|
| 0.005 | 0 | 12 | |
| 0 | 0.05 | 4 | |
| 0 | 0.25 | 8 | |
| 0 | 1.00 | 28 | |
| 0.005 | 0.05 | 18 | 16 |
| 0.005 | 0.25 | 41 | 19 |
| 0.005 | 1.00 | 56 | 37 |

Example 2

Example 1 was repeated using Pyricularia oxyzae as the fungus. Synergism was demonstrated as shown in Table 2.

Table 2

| Concentration of prochloraz (ppm) | Concentration of myclobutanil (ppm) | Observed percentage control | Expected percentage control (E) |
|---|---|---|---|
| | | | |

7 days after inoculation

| Concentration of prochloraz (ppm) | Concentration of myclobutanil (ppm) | Observed percentage control | Expected percentage control (E) |
|---|---|---|---|
| 0.025 | 0 | 15 | |
| 0 | 0.25 | 07 | |
| 0 | 1.00 | 30 | |
| 0.025 | 0.25 | 31 | 21 |
| 0.025 | 1.00 | 50 | 41 |

Example 3

Example 1 was repeated using Septoria nodorum as the fungus. Synergism was demonstrated as shown in Table 3.

Table 3

| Concentration of prochloraz (ppm) | Concentration of myclobutanil (ppm) | Observed percentage control | Expected percentage control (E) |
|---|---|---|---|
| 7 days after inoculation | | | |
| 0.005 | 0 | 4 | |
| 0 | 0.05 | 4 | |
| 0 | 0.25 | 31 | |
| 0 | 1.00 | 65 | |
| 0.005 | 0.05 | 12 | 8 |
| 0.005 | 0.25 | 50 | 34 |
| 0.005 | 1.00 | 73 | 66 |

Example 4

This example illustrates typical formulations which can be used as seed treatments

### Solution

|  | % by weight |
|---|---|
| prochloraz | 9.37 |
| myclobutanil | 5.86 |
| dye | 0.84 |
| N-methylpyrrolidone | to 100 |

### Aqueous flowable

|  | % by weight |
|---|---|
| prochloraz ($CuCl_2$ complex) | 9.9 |
| myclobutanil | 5.95 |
| non ionic surfactant on silica | 5.0 |
| dye | 4.0 |
| polysaccharide gum | 0.2 |
| water | to 100 |

### Dust

|  | % by weight |
|---|---|
| prochloraz ($MnCl_2$ complex) | 10.8 |
| myclobutanil | 4.0 |
| carboxin | 25.0 |
| dye | 2.0 |
| talc | to 100 |

**Claims**

1) A fungicidal composition comprising
   a) prochloraz, or a metal complex thereof, and
   b) myclobutanil.

2) A composition according to claim 1 wherein the ratio of the prochloraz to myclobutanil is in the range 3:1 to 1:2 based on the weight of the free bases.

3) A method for controlling a phytopathogenic fungus which comprises applying to seeds, plants and other vegetative material or their habitat
   a) prochloraz, or a metal complex thereof, and
   b) myclobutanil,
   components (a) and (b) being applied either together or in sequence.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 040 007 (FBC LTD) <br> * Claims; page 2, lines 1-5 * <br> --- | 1-3 | A 01 N 47/38 // <br> (A 01 N 47/38 <br> A 01 N 43:653) |
| A | EP-A-0 145 294 (ROHM AND HAAS CO.) <br> * Claims 8,9; page 2, paragraph 2 * <br> ----- | | |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 25-08-1988 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)